Europäisches Patentamt

(19) European Patent Office

Office européen des brevets

(11) Numéro de publication: **0 133 107**
**B1**

(12) **FASCICULE DE BREVET EUROPEEN**

(51) Int. Cl.⁴: **H 04 B 1/66**

(45) Date de publication du fascicule du brevet:
**27.01.88**

(21) Numéro de dépôt: **84401504.0**

(22) Date de dépôt: **18.07.84**

(54) **Dispositif pour le codage et le décodage d'une émission à large bande.**

(30) Priorité: **21.07.83 FR 8312043**

(43) Date de publication de la demande:
**13.02.85 Bulletin 85/7**

(45) Mention de la délivrance du brevet:
**27.01.88 Bulletin 88/4**

(84) Etats contractants désignés:
**DE FR GB NL**

(56) Documents cités:
**DE - A - 1 549 067**
**GB - A - 2 111 732**

**R.C. DIXON: "Spread spectrum systems", 1976, pages 13-191, John Wiley & Sons, New York, USA;**
**IEE PROCEEDINGS-F, vol. 128, no. 5, octobre 1981, pages 245-260, Old Woking, Surrey, GB; M.S. SHIPTON et al.: "Improvements in use of congested spectrum for land mobile radio service by adoption of bandsharing spread-spectrum system with TV broadcast channels"**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Nicolas, Michel Jacques Robert, 41, avenue des Champs, 91130 Ris Orangis (FR)**
Inventeur: **Sebilet, Bruno Roger, 16, rue Perronet, F-92150 Suresnes (FR)**

(74) Mandataire: **Moinat, François, S.N.E.C.M.A. Service des Brevets Boîte Postale 81, F-91003 Evry Cédex (FR)**

## Description

La présente invention se rapporte à un dispositif pour le codage et le décodage d'une émission à large bande, dispositif dans lequel un signal utile à transmettre est modulé en phase au moyen d'un modulateur $0-\pi$ commandé par un code formé d'une séquence de valeurs binaires et le signal transmis et reçu est démodulé en phase au moyen d'un démodulateur $0-\pi$ commandé par le même code, le code utilisé en réception étant calé par rapport à celui utilisé à l'émission par corrélation avec le signal reçu.

Il est bien connu, en vue d'éviter les brouillages et le décryptage d'une émission, de procéder à un codage par un large étalement du spectre. Dans le procédé du type indiqué ci-dessus, l'étalement du spectre est réalisé en modulant, au moyen d'un modulateur $0-\pi$, le signal utile par un code dont le spectre est beaucoup plus important. En réception, le code est recalé par corrélation avec le signal reçu; à cet effet, des moyens retardateurs sont utilisés pour décaler progressivement le code par rapport au signal reçu jusqu'à la détection du pic de corrélation. Un tel dispositif a été largement décrit dans la publication IEEE PROCEEDINGS – Vol 128 – Numéro 5, Octobre 1981, pages 245 à 260.

Il est bien évident que, pour être efficace, le code doit être long. Toutefois, plus le code utilisé est allongé et plus l'opération de calage en réception prend du temps et devient vite prohibitive. Cet inconvénient a été exposé dans l'ouvrage «SPREAD SPECTRUM SYSTEMS» de R.C. Dixon publié par JOHN WILEY AND SONS, 1976, pages 13 à 191. Dans ce document, Dixon préconise de remédier à cet inconvénient par l'utilisation d'un code long obtenu par la combinaison de plusieurs codes courts. Un exemple de combinaison est déjà décrit dans le DE-A-1 549 067. Toutefois il est nécessaire, en particulier pour les applications en téléphonie bilatérale, d'avoir un grand nombre de codes courts et un système logique de combinaison simple.

Ce but est atteint du fait que conformément à l'invention, le code utilisé est un code composé formé par la combinaison par logique majoritaire d'un nombre impair de codes élémentaires formés de séquences binaires pseudoaléatoires de longueur différentes et le calage du code en réception est réalisé par corrélation de chacun des codes élémentaires avec le signal reçu.

L'utilisation de codes élémentaires de longueurs différentes et, de préférence, premières entre elles, permet de conserver pour le codage les avantages connus des codes longs, c'est-à-dire la protection contre le décryptage, l'étalement uniforme de la puissance dans le domaine des fréquences utilisées et un gain de traitement élevé, donc une bonne protection contre les interférences. A ces avantages s'ajoute la possibilité de réaliser l'opération de calage en réception en un temps très court puisqu'elle porte sur les codes élémentaires. Selon que les corrélations de ceux-ci avec le signal reçu sont réalisées en parallèle ou successivement, la durée de l'opération de calage est celle nécessaire au calage du code élémentaire le plus long ou la somme de celles nécessaire aux calages des différentes codes élémentaires. Même dans ce dernier cas, la durée de l'opération de calage est négligeable par rapport à celle qui serait nécessaire pour caler par corrélation avec le signal reçu un code de la même longueur que le code composé.

L'invention concerne donc un dispositif du type comportant, du côté émetteur: un modulateur de phase $0-\pi$ recevant un signal utile à transmettre et engendrant un signal codé et un premier générateur de code formé d'une séquence de valeurs binaires et commandant le modulateur de phase; et, du côté du ou de chaque récepteur: un démodulateur de phase $0-\pi$ recevant le signal codé et restituant le signal utile décodé, un second générateur de code engendrant le même code que celui utilisé du côté émetteur et commandant le démodulateur de phase, et des moyens de corrélation recevant le signal codé et reliés au second générateur de code pour caler le générateur de code utilisé dans un récepteur par rapport à celui utilisé dans l'émetteur, dispositif dans lequel, conformément à l'invention:
– chaque générateur de code comporte: plusieurs générateurs élémentaires en nombre impair destinés à engendrer des codes élémentaires formés de séquences binaires pseudo-aléatoires de longueurs différentes et un circuit de commande des générateurs élémentaires,
– les moyens de corrélation reçoivent, d'une part, le signal codé et, d'autre part, chacun des codes élémentaires engendrés par les générateurs élémentaires du récepteur, et
– le circuit de commande des générateurs élémentaires du récepteur comprend des moyens de calage agissant en réponse à des signaux fournis par les moyens de corrélation pour caler chacun de ces générateurs élémentaires indépendamment des autres.

Conformément à l'invention, un circuit de combinaison relié aux sorties des générateurs élémentaires délivre un code formé par la combinaison par logique majoritaire des codes élémentaires.

Selon un premier mode de réalisation du dispositif conforme à l'invention, les moyens de corrélation comportent: un circuit corrélateur unique et des moyens de commutation qui sont disposés entre les générateurs élémentaires du récepteur et ce circuit corrélateur et qui sont commandés par des signaux fournis par le circuit de commande.

Selon un second mode de réalisation du dispositif conforme à l'invention, les moyens de corrélation comportent plusieurs circuits corrélateurs en nombre égal à celui des générateurs élémentaires et recevant chacun, d'une part, le signal codé et, d'autre part, un code élémentaire particulier.

D'autres particularités et avantages du procédé et du dispositif conformes à l'invention ressortiront à la lecture de la description faite ci-après, à titre indicatif mais non limitatif, en référence aux dessins annexés sur lesquels:

- la figure 1 est un schéma montrant un premier mode de réalisation d'un dispositif selon l'invention, et

– la figure 2 est un schéma du récepteur d'un second mode de réalisation d'un dispositif selon l'invention.

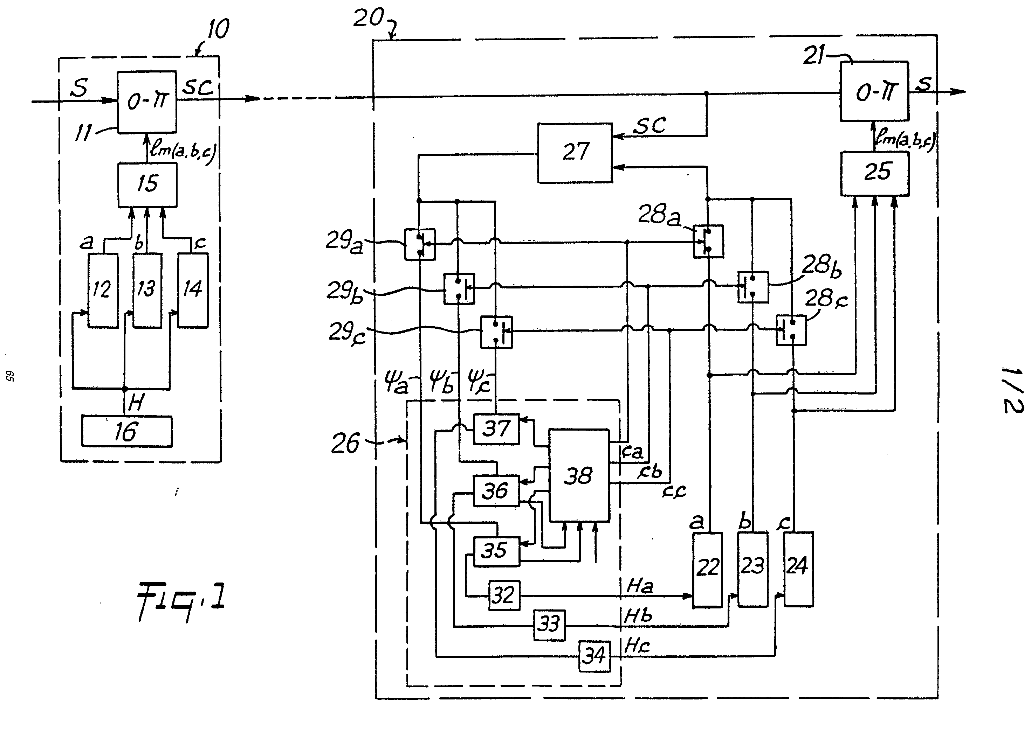

Le système de communication représenté sur la figure 1 comporte un émetteur 10 et au moins un récepteur 20, l'émission et la réception des signaux étant assurées par exemple par voie radioélectrique au moyen d'antennes (non représentées).

L'émetteur 10 reçoit un signal utile S à coder et à transmettre. Le codage est réalisé de façon connue en soi, au moyen d'un modulateur de phase 0–π qui délivre le signal codé SC et qui est commandé par un code formé par une séquence de bits, la phase du signal utile étant inversée ou non selon la valeur de chaque bit qui se présente et au rythme de présentation de ces bits.

Conformément à l'invention, le code appliqué au modulateur de phase 11 est un code composé formé par la combinaison par logique majoritaire d'un nombre impair de codes élémentaires. Dans l'exemple illustré, les codes élémentaires sont au nombre de trois mais tout nombre impair supérieur à trois pourrait avantageusement être utilisé. Les différents codes a, b, c sont produits par des générateurs de code 12, 13, 14 et sont formés par des séquences de bits pseudo-aléatoires. Les nombres na, nb, nc de bits formant les codes a, b, c sont différents et de préférence premiers entre eux. La combinaison par logique majoritaire est réalisée par un circuit loguique 15 qui reçoit les codes a, b, c fournis par les générateurs 12, 13 et 14 et qui réalise la fonction logique a.b+b.c+a.c. Les générateurs 12, 13, 14 sont commandés en synchronisme par une horloge 16 qui délivre un signal H formé par des impulsions dont la fréquence F détermine le rythme de défilement des bits successifs de chaque code; les générateurs 12, 13, 14 comprennent par exemple des registres à décalage bouclés sur euxmêmes et commandés par le signal H. Pour chaque groupe de trois bits qui se présentent simultanément, le circuit logique 15 fournit un bit dont la valuer (0 ou 1) est égale à la valeur majoritaire dans ce groupe. On obtient ainsi, en sortie du circuit 15 un code composé formé par la combinaison par logique majoritaire des codes élémentaires 1m (a, b, c) dont les bits successifs se présentent à la fréquence F et dont la longueur est égale au plus petit commun multiple de na, nb et nc, c'est-à-dire à na×nb×nc si ces nombres sont premiers entre eux. L'on peut considérer que le gain apporté par le procédé de codage selon l'invention est assimilable au rapport du plus petit commun multiple à la somme des nombres na, nb et nc; ce gain est donc maximal lorsque ces nombres sont premiers entre eux.

Le signal codé SC est démodulé dans le récepteur 20 par passage dans un démodulateur de phase 0–π 21 commandé par un code identique à celui utilisé dans l'émetteur afin de récupérer le signal utile S en sortie du démodulateur 21. La synchronisation du code utilisé dans le récepteur avec celui utilisé dans l'émetteur est effectuée par corrélation avec le signal reçu.

Le code fourni au démodulateur 21 est engendré au moyen d'un circuit logique 25 identique au circuit 15, par la combinaison par logique majoritaire des trois codes a, b, c fournis par des générateurs 22, 23, 24 identiques aux générateurs 12, 13, 14 et commandés par des signaux Ha, Hb, Hc. Ceux-ci sont délivrés par des horloges respectives 32, 33, 34 d'un circuit de commande 26.

La synchronisation du code du récepteur 21 avec celui de l'émetteur est effectuée par corrélation de chaque code a, b, c avec le signal codé SC. Dans le mode de réalisation de la figure 1, les corrélations des codes a, b, c avec le signal SC sont effectuées successivement au moyen d'un même circuit de corrélation 27 dont une entrée reçoit le signal SC et dont l'autre entrée est reliée aux générateurs 22, 23, 24 par l'intermédiaire d'interrupteurs respectifs 28a, 28b, 28c. En réponse à la détection d'un pic de corrélation, le circuit 27 fournit un signal sur sa sortie reliée à trois entrées du circuit 26 par l'intermédiaire d'interrupteurs respectifs 29a, 29b, 29c. Chaque générateur de code 22, 23, 24 est synchronisé sur le code reçu en contrôlant le retard avec lequel le code local est émis par rapport au code reçu. Ceci est réalisé par accélération ou ralentissement de l'horloge associée au générateur de code, le calage de celui-ci étant réalisé par asservissement du code local et du code reçu. A cet effet, chaque horloge 32, 33, 34 délivre les signaux Ha, Hb et Hc avec une fréquence variable sous la commande signaux SHa, SHb et SHc produits par des circuits de commande de frequence 35, 36 et 37. Ces derniers ont des entrées reliées respectivement aux interrupteurs 29a, 29b et 29c.

Le calage d'un générateur, par exemple 22, est effectuée comme suit. Les interrupteurs 28a et 29a sont fermés et les autres interrupteurs 28b, 28c, 29b et 29c sont ouverts, les différentes paires d'interrupteurs 28a–29a, 28b–29b et 28c–29c étant commandés par des signaux ca, cb, cc produits par un circuit séquenceur 38. La fréquence de l'horloge 32 est variée au moyen du circuit 35 jusqu'à détection par ce circuit d'un signal a provenant du circuit 27 et indiquant la présence d'un pic de corrélation, cette détection provoquant le verrouillage de la fréquence de l'horloge 32. Ensuite, les interrupteurs 28a, 29a sont ouverts et les interrupteurs 28b, 29b sont fermés pour réaliser de la même manière le calage de l'horloge 33 et du générateur 23 en réponse à un signal ψc indiquant un nouveau pic de corrélation. Enfin, les interrupteurs 28b, 29b sont ouverts et les interrupteurs 28c, 29c sont fermés pour réaliser le calage de l'horloge 34 et du générateur 24 en réponse à un signal ψc indiquant un nouveau pic de corrélation. Le calage des générateurs 22, 23, 24 étant alors terminé, le décodage proprement dit peut commencer. On notera que le séquenceur 38 produit des signaux appliqués aux circuits 35, 36, 37 pour déclenchement des phases de calage des générateurs 22, 23, 24 en réponse à un ordre extérieur et à des signaux reçus des circuits 36, 37, et indiquant que les générateurs 22 et 23 ont été calés.

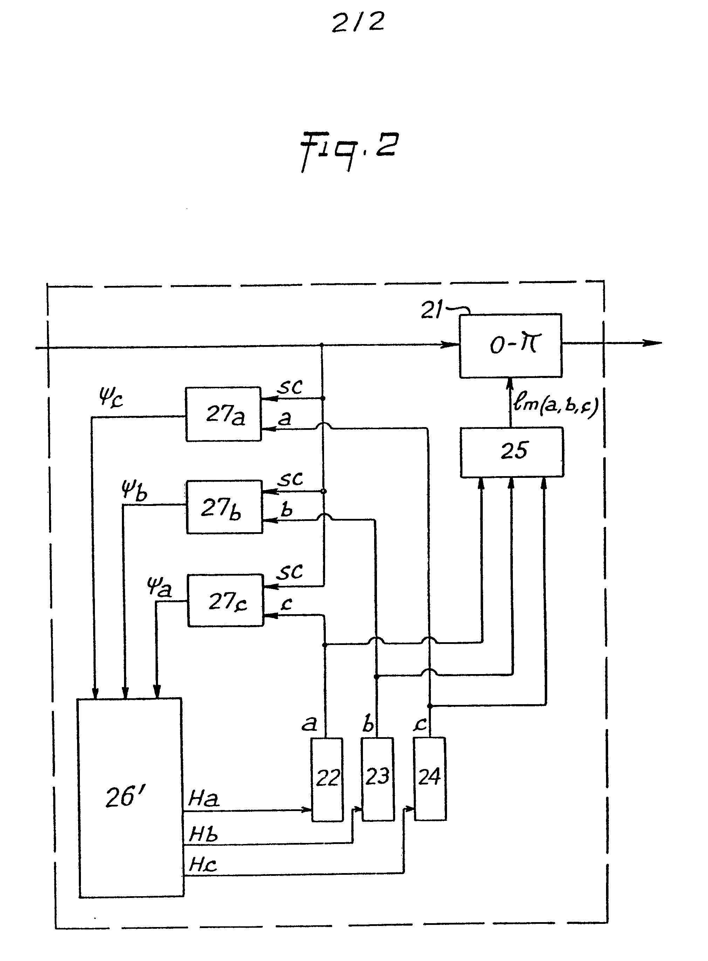

La figure 2 illustre un autre mode de réalisation du récepteur, les éléments identiques à ceux illustrés sur la figure 1 portant les mêmes références. Selon cet autre mode de réalisation, le calage des générateurs 22, 23, 24 est effectué en parallèle au lieu de séquentiellement. A cet effet, sont prévus trois circuits de corrélation 27a, 27b, 27c qui reçoivent le signal SC sur une première entrée et dont les deuxièmes entrées sont reliées respectivement aux générateurs 22, 23, 24. Un circuit de commande 26' reçoit les signaux ψa, ψb, et ψc des circuits de corrélation 27a, 27b, 27c et produit en réponse les signaux Ha, Hb, Hc de cadencement des générateurs 22, 23, 24.

Comme déjà indiqué, l'invention est particulièrement avantageuse en ce qu'elle permet d'allier les avantages d'un code long à ceux d'un calage rapide du code en réception. Afin de conserver des pics de corrélation d'amplitude suffisante pour permettre une détection sure, il est souhaitable de limiter le nombre de codes élémentaires utilisés. Il ne s'agit toutefois pas là d'une limitation gênante puisque des codes composés de plusieurs millions ou dizaines de millions de bits peuvent être obtenus à partir de trois codes élémentaires courts de quelques centaines ou quelques milliers de bits ne nécessitant qu'un temps restreint pour le calage en réception.

## Revendications

1. Dispositif pour le codage et le décodage d'une émission à large bande dans un système de communication comprenant un émetteur (10) et au moins un récepteur (20), dispositif comportant, du côté émetteur: un modulateur de phase 0–π (11) recevant un signal utile à transmettre (S) et engendrant un signal codé (SC) et un premier générateur de code formé d'une séquence de valeur binaires et commandant le modulateur de phase: et, du côté du ou de chaque récepteur: un démodulateur de phase 0–π (21) recevant le signal codé (SC) et restituant le signal utile (S) décodé, un second générateur de code engendrant le même code que celui utilisé du côté émetteur et commandant le démodulateur de phase, et des moyens de corrélation recevant le signal codé et reliés, au second générateur de code pour caler le générateur de code utilisé dans un récepteur par rapport à celui utilisé dans l'émetteur, dans lequel:
— chaque générateur de code, comporte: plusieurs générateurs élémentaires (12 à 14; 22 à 24) en nombre impair destinés à engendrer des codes élémenaires (a, b, c) formés de séquences binaires pseudo-aléatoires de longueurs différentes et un circuit de commande (16; 26; 26') des générateurs élémentaires,
— les moyens de corrélation (27; 27a, 27b, 27c) reçoivent, d'une part le signal codé et, d'autre part, chacun des codes élémentaires engendrés par les générateurs élémentaires du récepteur, et
— le circuit de commande (26; 26') des générateurs élémentaires du récepteur (20) comprend des moyens de calage agissant en réponse à des signaux (ψa, ψb, ψc) fournis par les moyens de corrélation (27; 27a, 27b, 27c) pour caler chacun de ces générateurs élémentaires indépendamment des autres, caractérisé en ce que: un circuit de combinaison (15; 25) relié aux sorties des générateurs élémentaires (12 à 14; 22 à 24) réalise la fonction logique a.b+b.c+a.c et délivre un code formé par la combinaison par logique majoritaire des codes élémentaires (a, b, c).

2. Dispositif selon la revendication 1, caractérisé en ce que les moyens de corrélation comportent: un circuit corrélateur unique (27) et des moyens de commutation (28a, 28b, 28c) qui sont disposés entre les générateurs élémentaires (22, 23, 24) du récepteur et ce circuit corrélateur (27) et qui sont commandés par des signaux (ca, cb, cc) fournis par le circuit de commande (26).

3. Dispositif selon la revendication 1, caractérisé en ce que les moyens de corrélation comportent plusieurs circuits corrélation (27a, 27b, 27c) en nombre égal à celui des générateurs élémentaires (22, 23, 24) et recevant chacun, d'une part, le signal codé (SC) et, d'autre part, un code élémentaire particulier (a, b, c).

## Patentansprüche

1. Vorrichtung zur Kodierung und Dekodierung einer Breitband-Sendung in einem Kommunikationssystem mit einem Sender (10) und wenigstens einem Empfänger (20), wobei die Vorrichtung senderseitig
— einen im Bereich von 0 bis π arbeitenden Phasenmodulator (11) zur Aufnahme eines zu sendenden Nutzsignals (S) und zur Erzeugung eines kodierten Signals (SC) und
— einen ersten Kodegenerator zur Erzeugung eines aus einer Folge von Binärwerten gebildeten Kodes zur Steuerung des Phasenmodulators und auf der Seite des oder jedes Empfängers
— einen im Bereich von 0 bis π arbeitenden Phasendemodulator (21) zur Aufnahme des kodierten Signals (SC) und zur Wiederherstellung des dekordierten Nutzsignals (S)
— einen zweiten Kodegenerator, der denselben Kode erzeugt wie der senderseitig verwendete erste Kodegenerator und der den Phasendemodulator steuert, sowie
— eine Korrelationseinrichtung zur Aufnahme des kodierten Signals, die mit dem zweiten Kodegenerator verbunden ist, um den in einem Empfänger verwendeten Kodegenerator mit dem in dem Sender verwendeten Kodegenerator zu synchronisieren, aufweist und wobei
— jeder der genannten Kodegeneratoren eine ungerade Zahl von Elementargeneratoren (12 bis 14; 22 bis 24) zur Erzeugung von aus pseudoaleatorischen binären Sequenzen unterschiedlicher Länge bestehenden Elementarkodes (a, b, c) sowie eine Steuerschaltung (16; 26; 26') für die Elementargeneratoren aufweist,
— die Korrelationseinrichtung (27; 27a, 27b, 27c) einerseits das kodierte Signal und andererseits jeden der von den Elementargeneratoren des Empfängers erzeugten Elementarkodes empfängt,

– und die Steuerschaltung (26; 26') der Elementargeneratoren des Empfängers (20) Synchronisierungsmittel aufweist, die in Abhängigkeit von von der Korrelationseinrichtung (27; 27a, 27b, 27c) gelieferten Signalen (4a, 4b, 4c) wirksam werden, um jeden dieser Elementargeneratoren unabhängig von den anderen zu synchronisieren, dadurch gekennzeichnet, dass eine mit den Ausgängen der Elementargeneratoren (12 bis 14; 22 bis 24) verbundene Kombinationsschaltung (15; 25) die logische Funktion a.c+b.c+a.c ausführt und einen Kode liefert, der durch die Kombination der Elementarkodes (a, b, c) durch Majoritätslogik gebildet wird.

2. Vorrichtung nach Anspruch 1, dadurch gekennzeichnet, dass die Korrelationseinrichtung eine einzige Korrelationsschaltung (27) sowie Umschaltemittel (181, 28b, 28c) aufweist, die zwischen den Elementargeneratoren (22, 23, 24) des Empfängers und dieser Korrelationsschaltung (27) angeordnet sind und durch von der Steuerschaltung (26) gelieferte Signale (ca, cb, cc) gesteuert werden.

3. Vorrichtung nach Anspruch 1, dadurch gekennzeichnet, dass die Korrelationseinrichtung mehrere Korrelationsschaltungen (27a, 27b, 27c) aufweist, deren Zahl derjenigen der Elementargeneratoren (22, 23, 24) entspricht und die jeweils einerseits das kodierte Signal (SC) und andererseits einen bestimmten Elementarkode (a, b, c) aufnehmen.

## Claims

1. Apparatus for coding and decoding a broadband transmission in a communication system comprising a transmitter (10) and at least one receiver (20), the apparatus comprising, on the transmitter side: a 0–π phase modulator (11) receiving a useful signal (S) for transmission and generating a coded signal (SC) and a first code generator formed by a sequence of binary values and controlling the phase modulator: and, at the or each receiver: a 0–π phase demodulator (21) receiving the coded signal (SC) and restoring the decoded useful signal (S), a second code generator generating the same code as that used at the transmitter and controlling the phase demodulator, and correlation means receiving the coded signal and connected to the second code generator to set the code generator used in a receiver with respect to that used in the transmitter, in which:

– each code generator comprises: a plurality of elementary generators (12 to 14; 22 to 24) of odd number adapted to generate elementary codes (a, b, c) formed by pseudo-random binary sequences of different lengths and a control circuit (16; 26; 26') for the elementary generators,

– the correlation means (27; 27a, 27b, 27c) receive, on the one hand, the coded signal and, on the other hand, each of the elementary codes generated by the elementary generators of the receiver, and

– the control circuit (26; 26') of the elementary generators of the receiver (20) comprises setting means acting in response to signals ($\psi$a, $\psi$b, $\psi$c) delivered by the correlation means (27; 27a, 27b, 27c) to set each of the said elementary generators independently of the others, characterised in that a combination circuit (15; 25) connected to the outputs or the elementary generators (12 to 14; 22 to 24) provides the logic function a.b+b.c +a.c and delivers a code formed by the combination by majority logic of the elementary codes (a, b, c).

2. Apparatus according to calim 1, characterised in that the correlation means comprise a single correlator circuit (27) and switching means (28a, 28b, 28c) which are disposed between the elementary generators (22, 23, 24) or the receiver and said correlator circuit (27) and which are controlled by signals (ca, cb, cc) delivered by the control circuit (26).

3. Apparatus according to claim 1, characterised in that the correlation means comprise a plurality of correlator circuits (27a, 27b, 27c) in a number equal to the number of elementary generators (22, 23, 24) and each receiving, on the one hand, the coded signal (SC) and, on the other hand, a specific elementary code (a, b, c).

Fig. 1

0 133 107

1/2

$Fig.2$